# DEMANDE DE BREVET EUROPEEN

(11) **EP 4 116 677 A1**
(43) Date de publication de la demande: **11.01.2023**
(21) Numéro de dépôt: 22182885.8
(22) Date de dépôt: 04.07.2022
(51) Int. Cl.: G01F 11/18, G01F 11/24, B29C 64/255, B22F 12/50, B29C 64/307, B33Y 40/00, G01F 13/00

(54) **SYSTÈME DE TRANSFERT DE MATÉRIAU GRANULAIRE AUTORÉGULÉ**

(30) Priorité: 06.07.2021 BE 202105527
(71) Demandeur: Aerosint, 4040 Herstal (BE)
(72) Inventeur: SOLER LILLO, Jonathan, 4040 Herstal (BE); MARCHAL, Martin, 4040 Herstal (BE); HICK, Matthias, 4040 Herstal (BE)
(74) Mandataire: Gevers Patents

(57) **Abrégé**

La présente invention concerne un système (100) autorégulé mécaniquement pour transférer du matériau granulaire (30) depuis un réservoir supérieur (20), de contenance plus grande, vers un réservoir inférieur (10), de contenance plus petite. Le transfert de matériau granulaire (30) s'arrête spontanément lorsque le tas de matériau granulaire (30a) dans le réservoir inférieur (10) atteint son angle de repos (31)

## Description

### Domaine technique

La présente invention concerne un système pour transférer du matériau granulaire d'un réservoir plus grand vers un réservoir plus petit. Il peut être utilisé notamment dans le cadre d'un système d'impression tridimensionnelle.

### Art antérieur

La demande de brevet WO2019/185466 décrit un dispositif pour manipuler des particules comprenant un élément d'alimentation. Cet élément d'alimentation est un réservoir lui-même être alimenté en matériau granulaire.

Le document US4166487A décrit un dispositif de distribution et de mesure de particules comprenant un récipient ayant une sortie d'évacuation vers le bas à l'intérieur et un orifice de guidage s'étendant transversalement à travers celui-ci sous la sortie.

Il existe différentes méthodes pour transférer du matériau granulaire d'un réservoir plus grand à un réservoir plus petit. Par exemple, un opérateur peut prendre un récipient gradué pour faire le transfert. Une telle méthode est cependant peu fiable et onéreuse.

### Résumé de l'invention

Un objet de la présente invention est de fournir un système autorégulé mécaniquement pour transférer du matériau granulaire depuis un réservoir supérieur, de contenance plus grande, vers un réservoir inférieur, de contenance plus petite.

A cet effet, l'invention propose un système comprenant :
- un réservoir inférieur ayant une première contenance, et comprenant :
   ∘ un conteneur inférieur ayant une ouverture supérieure,
   ∘ un couvercle configuré pour passer, par poussée, d'une première position dans laquelle il ferme, au moins partiellement, l'ouverture supérieure, à une deuxième position dans laquelle il ouvre, au moins partiellement, l'ouverture supérieure ;
- un réservoir supérieur ayant une deuxième contenance, et comprenant :
   ∘ un conteneur supérieur ayant une ouverture inférieure,
   ∘ un obturateur configuré pour passer, par poussée, d'une première position dans laquelle il ferme l'ouverture inférieure, à une deuxième position dans laquelle il ouvre, au moins partiellement, l'ouverture inférieure;

   dans lequel la deuxième contenance est supérieure à la première contenance ;
   configuré pour un premier mouvement relatif entre le conteneur inférieur et le conteneur supérieur ;
   configuré pour que le couvercle bute contre le réservoir supérieur lors dudit premier mouvement relatif, de façon à ce que le réservoir supérieur pousse le couvercle pour qu'il passe de la première position à la deuxième position ; configuré pour que l'obturateur bute contre le réservoir inférieur lors dudit premier mouvement relatif, de façon à ce que le réservoir inférieur pousse l'obturateur pour qu'il passe de la première position à la deuxième position ; et
   configuré pour former un passage via l'ouverture inférieure du conteneur supérieur et l'ouverture supérieure du conteneur inférieur, entre le conteneur supérieur et le conteneur inférieur suite audit premier mouvement relatif.

Dans le système selon l'invention, le réservoir supérieur s'ouvre par le bas et le réservoir inférieur s'ouvre par le haut lors du premier mouvement relatif, et le matériau granulaire s'écoule alors d'elle-même entre le conteneur supérieur et le conteneur inférieur. Le système est autorégulé car l'écoulement s'arrête de lui-même lorsque le tas de matériau granulaire dans le conteneur inférieur atteint son angle de repos, bien qu'il reste du matériau granulaire dans le conteneur supérieur, sans qu'il n'y ait besoin de capteur ou de chronomètre. Le volume de matériau granulaire dans le réservoir inférieur à la fin de l'écoulement est toujours le même d'une utilisation à l'autre puisque l'arrêt de l'écoulement est déterminé par l'angle de repos du matériau granulaire.

Le système selon l'invention est particulièrement fiable dans un environnement poussiéreux puisqu'il ne requière aucun capteur électrique. En outre, il est particulièrement facile à fabriquer.

Un autre avantage du système selon l'invention est que le premier mouvement peut être réalisé un grand nombre de fois sans risque de débordement du réservoir inférieur, même si celui-ci est déjà partiellement ou totalement rempli.

Le premier mouvement relatif peut être tel que le conteneur inférieur bouge par rapport au conteneur supérieur qui est immobile (c'est le mode de réalisation préféré car le conteneur inférieur est plus petit), que le conteneur supérieur bouge par rapport au conteneur inférieur qui est immobile, ou une combinaison de mouvements du des conteneurs inférieur et supérieurs. Le premier mouvement relatif est préférentiellement une translation. Le premier mouvement relatif n'inclut préférentiellement pas de basculement. Il est préférentiellement uniquement horizontal.

Le couvercle permet d'éviter que des corps étrangers ne rentrent dans le réservoir inférieur.

La jonction entre le conteneur supérieur et l'obturateur n'est pas nécessairement étanche : il se pourrait par exemple que le matériau granulaire repose sur l'obturateur et que son angle de repos l'empêche de s'écouler par des brèches entre le conteneur supérieur et l'obturateur.

Dans le cadre du présent document, la « contenance » d'un conteneur est son volume interne. La deuxième contenance est préférentiellement au moins deux fois, plus préférentiellement au moins dix fois, la première contenance.

Dans le cadre du présent document, l' « angle de repos » d'un matériau granulaire est l'angle que fait la pente d'un tas de matériau granulaire empilée non tassée avec l'horizontale.

Dans le cadre du présent document, le « matériau granulaire » est un matériau fait de particules, de grains et/ou de morceaux solides et distinct(e)s. Cela peut être par exemple de la poudre, du sable, des céréales, du gravier, du charbon,...

Lors de chaque réalisation du premier mouvement, un certain volume de matériau granulaire peut se loger dans un logement temporaire formé temporairement par l'agencement des éléments du système selon l'invention. Ce volume de matériau granulaire peut ensuite tomber à cause du mouvement des éléments du système selon l'invention.

Le système est préférentiellement agencé pour que le tas de matériau granulaire dans le conteneur inférieur ne touche pas le couvercle, afin d'éviter qu'il ne colle dessus.

Selon un mode de réalisation, le conteneur inférieur comprend une paroi avant et une paroi arrière, la paroi avant étant plus petite que la paroi arrière. La paroi avant est la paroi du conteneur inférieur qui passe en premier sous le conteneur supérieur lors du premier mouvement relatif. Le fait qu'elle soit plus basse permet qu'elle passe plus facilement sous le conteneur supérieur. En outre, cela peut permettre que le haut de la paroi arrière soit plus haut que l'ouverture inférieure lors de l'écoulement, limitant ainsi les risques de fuite de matériau granulaire.

Selon un mode de réalisation, le conteneur inférieur comprend une paroi avant dont la partie supérieure est formée par un joint avant. Ce joint permet de limiter les fuites de matériau granulaire. Il peut éventuellement se courber lorsque la paroi avant passe sous le conteneur supérieur. Il peut s'étendre, ou pas, jusqu'au couvercle lorsque le couvercle est dans la première position.

Selon un mode de réalisation, le couvercle et/ou l'obturateur est configuré pour passer de la première à la deuxième position par une translation, une rotation, ou une combinaison d'une translation et d'une rotation. La translation est préférentiellement horizontale et/ou dans le sens opposé à celui du premier mouvement relatif. La rotation peut être autour d'un axe horizontal ou vertical. Pour une translation, le système comprend préférentiellement des rails pour guider le couvercle et/ou l'obturateur. Pour une rotation, il est préféré que le système ne comprenne pas de rails de guidage car il est alors plus simple et plus facile à nettoyer.

Selon un mode de réalisation, l'extrémité avant de l'obturateur est biseautée. L'extrémité avant est celle qui fait face au réservoir inférieur avant le premier mouvement. Un tel biseau permet de diminuer la quantité de matériau granulaire présente dans le logement temporaire.

Selon un mode de réalisation, le système comprend une première butée configurée pour former un contact momentané entre l'obturateur et le réservoir inférieur lorsque l'obturateur bute contre le réservoir inférieur lors dudit premier mouvement relatif. La première butée peut être fixée à l'obturateur, au réservoir inférieur, ou comprendre une première partie fixée au réservoir inférieur et une deuxième partie fixée à l'obturateur. Elle est préférentiellement en saillie par rapport à l'élément auquel elle est fixée.

Selon un mode de réalisation, le système comprend une deuxième butée configurée pour former un contact momentané entre le couvercle et le réservoir supérieur lorsque couvercle bute contre le réservoir supérieur lors dudit premier mouvement relatif. La deuxième butée peut être fixée au couvercle, au réservoir supérieur, ou comprendre une première partie fixée au réservoir supérieur et une deuxième partie fixée au couvercle. Elle est préférentiellement en saillie par rapport à l'élément auquel elle est fixée.

Selon un mode de réalisation, l'obturateur est plus bas que le couvercle. Cela permet d'éviter d'avoir du matériau granulaire dans un logement temporaire créé le mouvement.

Selon un mode de réalisation, le système est configuré pour que le couvercle bute contre le réservoir supérieur avant que l'obturateur ne bute contre le réservoir inférieur lors dudit premier mouvement relatif. C'est notamment le cas si la distance initiale, c'est-à-dire au début du premier mouvement relatif, entre la partie du couvercle qui bute contre le conteneur supérieur et la partie du conteneur supérieur qui bute contre le couvercle est plus petite que la distance initiale entre la partie de l'obturateur qui bute contre le conteneur inférieur et la partie du conteneur inférieur qui bute contre l'obturateur. Cela permet de diminuer le risque que l'obturateur ne bouge en ouvrant l'ouverture inférieure alors que le conteneur inférieur ne serait pas encore sous l'ouverture inférieure.

Selon un mode de réalisation, le système comprend des premiers éléments de rappel configurés pour maintenir le couvercle dans la première position lorsqu'il ne subit pas de poussée et/ou des deuxièmes éléments de rappel configurés pour maintenir l'obturateur dans la première position lorsqu'il ne subit pas de poussée. Cela permet que le couvercle et/ou l'obturateur revienne automatiquement dans la première position lors d'un deuxième mouvement relatif, qui est préférentiellement le mouvement retour du premier mouvement relatif.

Selon un mode de réalisation, le système est configuré pour arrêter le premier mouvement relatif, par exemple à l'aide d'une butée, lorsque le passage entre le conteneur supérieur et le conteneur inférieur est ouvert, de façon à empêcher la continuation du premier mouvement relatif au-delà de la configuration dans laquelle le passage entre le conteneur supérieur et le conteneur inférieur est ouvert. Ce blocage permet que le premier mouvement relatif se termine à l'endroit voulu. Il peut être réalisé par une butée fixe par rapport au conteneur supérieur ou par rapport au conteneur inférieur.

Selon un mode de réalisation, le réservoir inférieur comprend une paroi divisant le réservoir inférieur en un compartiment avant et un compartiment arrière. Le système est préférentiellement configuré pour que le blocage du premier mouvement relatif ait lieu lorsque le compartiment arrière du réservoir inférieur est en-dessous de l'ouverture inférieure. Cela permet qu'un éventuel excédent de matériau granulaire tombe dans le compartiment avant et non à l'extérieur du réservoir inférieur.

Selon un mode de réalisation, le réservoir inférieur et/ou le réservoir supérieur comprend des ouvertures pour injecter de l'air et des parties de parois poreuses à l'air. Le matériau granulaire a tendance à former des structures empêchant l'écoulement, comme des ponts. Injecter de l'air permet d'éviter de telles structures. Les parois poreuses permettent d'éviter une surpression due à l'injection d'air.

L'invention propose en outre un procédé d'utilisation d'un système selon un mode quelconque de réalisation de l'invention. Ce procédé peut notamment être décrit de la façon suivante. Procédé pour transférer un volume de matériau granulaire d'un réservoir supérieur de plus grande contenance à un réservoir inférieur de plus petite contenance, ledit procédé comprenant les étapes suivantes :
(a) mettre dans un conteneur supérieur du réservoir supérieur un volume de matériau granulaire plus grand que la contenance du réservoir inférieur, le conteneur supérieur ayant une ouverture inférieure fermée par un obturateur empêchant le matériau granulaire de s'écouler par l'ouverture inférieure ;
(b) réaliser un premier mouvement relatif entre le conteneur supérieur et un conteneur inférieur du réservoir supérieur, durant lequel :
   ∘ un couvercle du réservoir inférieur est poussé par le réservoir supérieur de façon à ouvrir, au moins partiellement, une ouverture supérieure du conteneur inférieur,
   ∘ l'obturateur est poussé par le réservoir inférieur de façon à ouvrir, au moins partiellement, l'ouverture inférieure,
   ∘ l'ouverture inférieure et l'ouverture supérieure se placent de façon à former un passage entre le conteneur supérieur et le conteneur inférieur ;
(c) laisser du matériau granulaire s'écouler par ledit passage de façon à former un tas de matériau granulaire dans le conteneur inférieur, jusqu'à ce que le tas de matériau granulaire atteigne un angle de repos.

Puisque le volume de matériau granulaire initialement présent dans le réservoir supérieur est plus grand que la contenance du réservoir inférieur, il reste du matériau granulaire dans le réservoir supérieur lors de l'arrêt de l'écoulement.

Selon un mode de réalisation, le procédé comprend en outre de réaliser un deuxième mouvement relatif, qui est un mouvement retour du premier mouvement relatif, entre le conteneur supérieur et le conteneur inférieur, durant lequel :
- l'ouverture inférieure et l'ouverture supérieure se décalent latéralement,
- l'obturateur referme l'ouverture inférieure,
- le couvercle referme, au moins partiellement, l'ouverture supérieure.

Préférentiellement, durant le deuxième mouvement relatif, l'obturateur reprend sa première position et le couvercle reprend sa première position.

Selon un mode de réalisation, le procédé comprend en outre les étapes de :
- enlever du matériau granulaire (30a) du conteneur inférieur ;
- réaliser le premier mouvement relatif une deuxième fois.

Les éléments du système selon l'invention retrouvent leur place à chaque cycle de remplissage.

### Brève description des figures

D'autres caractéristiques et avantages de l'invention apparaîtront à la lecture de la description détaillée qui suit pour la compréhension de laquelle on se reportera aux figures annexées parmi lesquelles :
- les figures 1a à 1e sont des vues en coupe verticales schématiques illustrant des étapes d'un procédé mettant en oeuvre un système selon un mode de réalisation de l'invention;
- la figure 2 est une vue tridimensionnelle d'un système selon un mode de réalisation de l'invention;
- la figure 3 est une vue en coupe verticale d'un réservoir inférieur d'un système selon un mode de réalisation possible de l'invention;
- la figure 4 est une vue en coupe verticale d'un système selon un mode de réalisation de l'invention;
- la figure 5 est une vue en coupe verticale d'obturateur d'un système selon un mode de réalisation de l'invention;
- les figures 6a à 6c sont des vues en coupe verticales schématiques illustrant des étapes d'un procédé mettant en oeuvre un système selon un mode de réalisation de l'invention;
- la figure 7 est une vue en coupe verticale d'obturateur d'un système selon un mode de réalisation de l'invention;
- les figures 8a et 8b sont des vues en coupe verticales schématiques illustrant des étapes d'un procédé mettant en oeuvre un système selon un mode de réalisation de l'invention;
- la figure 9 est une vue en coupe verticale d'obturateur d'un système selon un mode de réalisation de l'invention;
- la figure 10 est une vue en coupe verticale d'obturateur d'un système selon un mode de réalisation de l'invention;
- les figures 11a à 11c sont des vues en coupe verticales schématiques illustrant des étapes d'un procédé mettant en oeuvre un système selon un mode de réalisation de l'invention;
- la figure 12 est une vue en coupe horizontale d'obturateur et d'un couvercle d'un système selon un mode de réalisation de l'invention;
- la figure 13 est une vue en coupe verticale d'un réservoir supérieur d'un système selon un mode de réalisation possible de l'invention;
- la figure 14 est une vue en coupe verticale d'un réservoir inférieur d'un système selon un mode de réalisation possible de l'invention;
- la figure 15 est une vue en coupe verticale d'un système selon un mode de réalisation possible de l'invention;
- la figure 16 est une vue en coupe verticale d'un système selon un mode de réalisation possible de l'invention;
- la figure 17 est une vue en coupe verticale d'un réservoir supérieur d'un système selon un mode de réalisation possible de l'invention ;
- les figures 18a à 18b sont des vues en coupe verticales schématiques illustrant des étapes d'un procédé mettant en oeuvre un système selon un mode de réalisation de l'invention ;
- les figures 19a à 19c sont des vues du dessus schématiques illustrant des étapes d'un procédé mettant en oeuvre un système selon un mode de réalisation de l'invention ;
- les figures 20a à 20c sont des vues en coupe verticales schématiques illustrant des étapes d'un procédé mettant en oeuvre du système illustré aux figures 19a à 19c ;
- la figure 21a est une vue tridimensionnelle d'un système selon un mode de réalisation de l'invention ;
- la figure 21b est la même vue que la figure 21a où certains éléments du système ont été omis ;
- la figure 22 est une autre vue des éléments montrés à la figure 21b ; et
- la figure 23 est une autre vue de certains des éléments de la figure 22.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants. En outre, les fonctions décrites peuvent être réalisées par d'autres structures que celles décrites dans le présent document.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

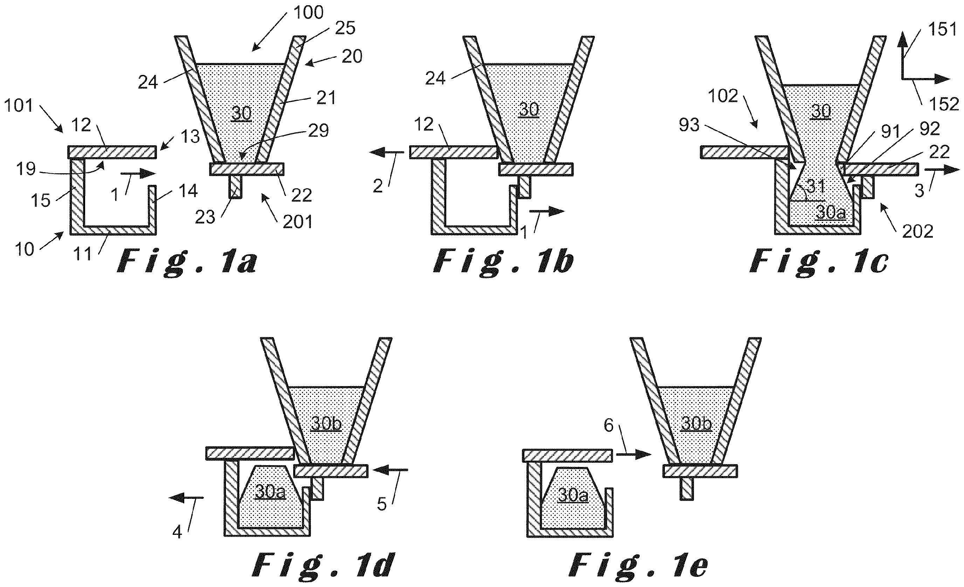

Les figures 1a à 1e illustrent un système 100 selon l'invention durant différentes étapes d'une utilisation préférée du système 100, et deux directions : une première direction 151, qui est verticale, et une deuxième direction 152, qui est horizontale.

Le système 100 comprend un réservoir inférieur 10 et un réservoir supérieur 20, qui peuvent être mis en mouvement l'un par rapport à l'autre. Dans un mode de réalisation préféré, le réservoir inférieur 10 est mobile et le réservoir supérieur 20 est fixe. La contenance du réservoir supérieur 20 est plus grande que la contenance du réservoir inférieur 10. Le réservoir supérieur 20 est préférentiellement une réserve fixe de matériau granulaire dans laquelle vient s'approvisionner régulièrement le réservoir inférieur 10, plus petit.

Le réservoir inférieur 10 comprend un conteneur inférieur 11 ouvert sur le dessus par une ouverture supérieure 19, et un couvercle 12 prévu pour fermer au moins partiellement l'ouverture supérieure 19 lorsqu'il est dans une première position 101. Le couvercle 12 est mécaniquement couplé au conteneur inférieur 11 de façon à suivre, en l'absence d'obstacle, le mouvement du conteneur inférieur 11. Le couvercle 12 n'est pas collé au conteneur inférieur 11. Le couvercle 12 est préférentiellement l'unique obstruction de l'ouverture supérieure 19.

Le couvercle 12 comprend une paroi avant 13. Le conteneur inférieur 11 comprend une paroi avant 14 et une paroi arrière 15, préférentiellement plus haute que la paroi avant 14 de sorte qu'il y a un espace entre le couvercle 12 et la paroi avant 14.

Le réservoir supérieur 20 comprend un conteneur supérieur 21 ouvert sur le dessous par une ouverture inférieure 29, et un obturateur 22 prévu pour fermer l'ouverture inférieure 29 lorsqu'il est dans une première position 201. L'obturateur 22 est mécaniquement couplé au conteneur supérieur 21 de façon à suivre, en l'absence d'obstacle, le mouvement du conteneur supérieur 21. L'obturateur 22 n'est pas collé au conteneur supérieur 21. L'obturateur 22 est préférentiellement l'unique obstruction de l'ouverture inférieure 29. Le conteneur supérieur 21 a de préférence une ouverture d'alimentation, par exemple située sur sa paroi supérieure comme illustré à la figure 1. Cette ouverture d'alimentation peut être fermée par un autre couvercle amovible et/ou être en communication avec un système externe d'apport en matériau granulaire.

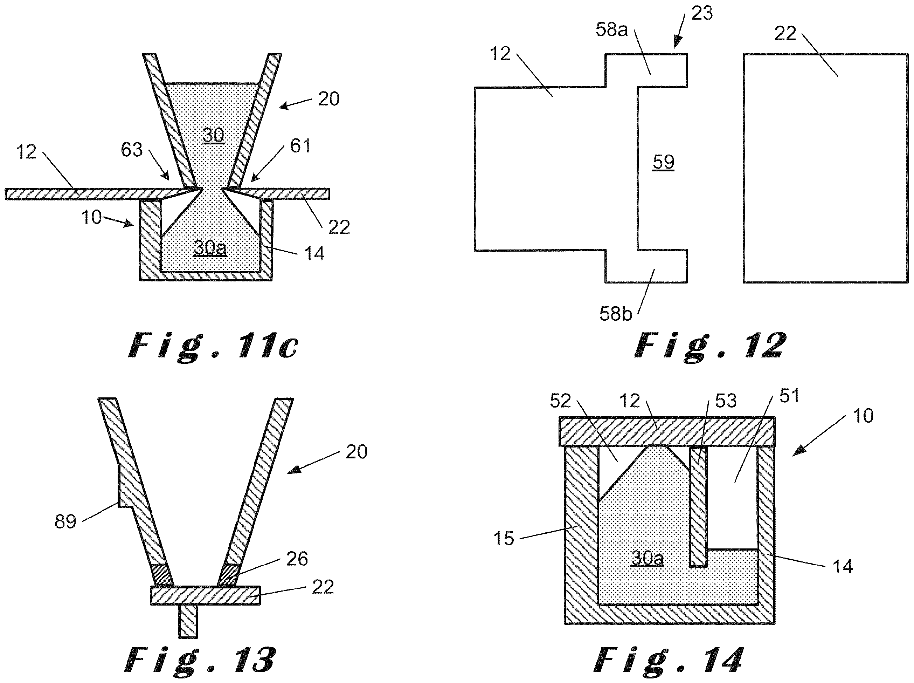

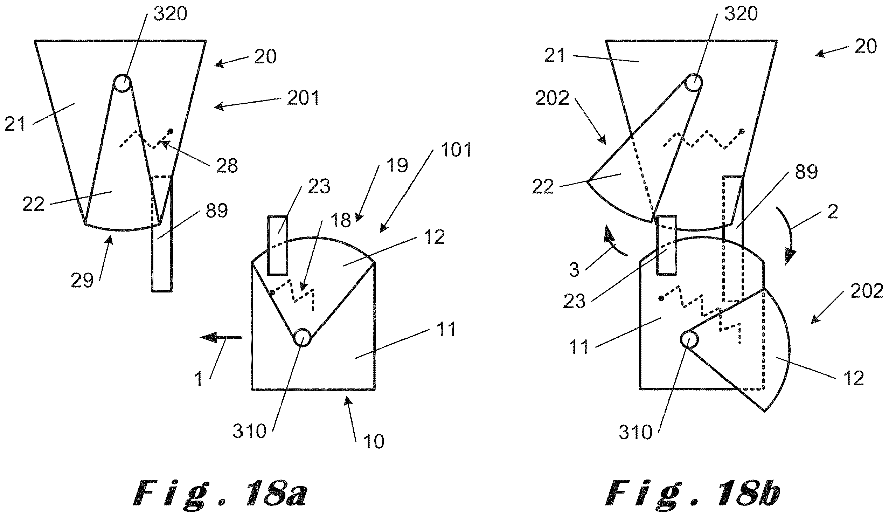

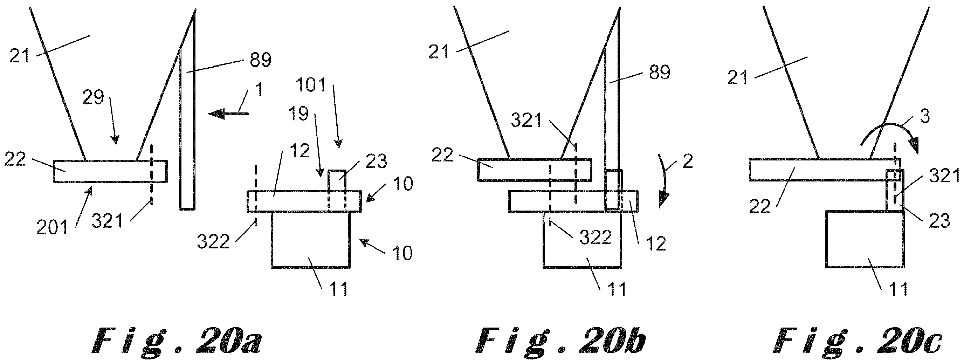

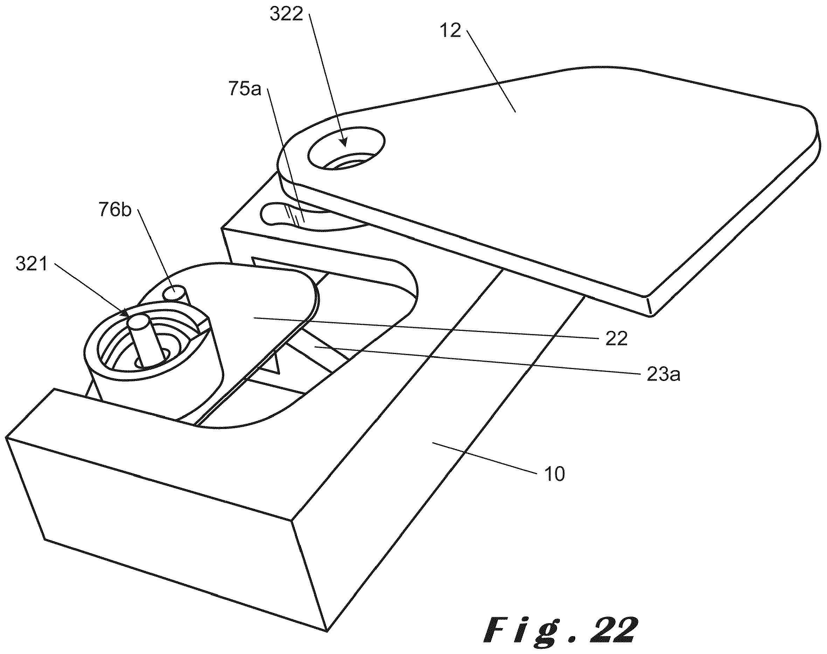

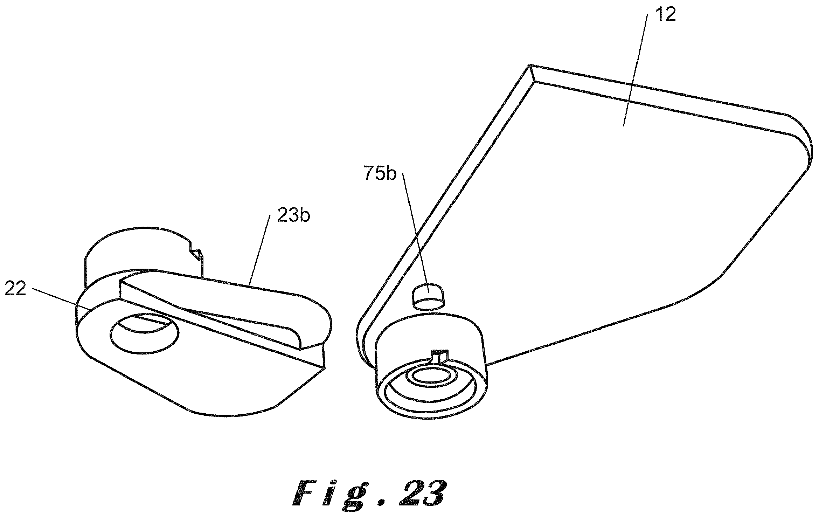

Le système 100 comprend préférentiellement une première butée 23 prévue pour créer un contact temporaire, direct ou indirect, entre l'obturateur 22 et le réservoir inférieur 10, de façon à pousser l'obturateur 22 de la première position 201 à la deuxième position 202. Elle peut être sur l'obturateur 22 (figure 1a) et/ou sur le réservoir inférieur 10, par exemple sur le couvercle 12 (figure 12) ou sur le conteneur inférieur (figures 18a, b et 20a-c). Elle peut comprendre une première partie sur le réservoir inférieur 10 (figure 22) et une deuxième partie sur l'obturateur 22 (figure 23). Elle peut être verticale (figures 1a, 18a, b et 20a-c) et/ou être latérale (figures 12, 18a, b et 20a-c). Elle peut être formée de deux parties de butées latérales 58a, 58b (figure 12). Elle est préférentiellement configurée pour permettre un défaut d'alignement avec le réservoir inférieur 20. Le conteneur supérieur 21 comprend une paroi avant 24 et une paroi arrière 25.

Le système 100 peut comprendre un dispositif de guidage, par exemple des rails, pour réaliser un premier mouvement 1 relatif entre le conteneur inférieur 11 et le conteneur supérieur 21, et préférentiellement un deuxième mouvement 4 est un mouvement inverse du premier mouvement relatif 1. Le premier 1 et le deuxième 4 mouvements sont préférentiellement uniquement selon la deuxième direction 152. Ils peuvent être générés manuellement ou par un moteur.

Avant de débuter le premier mouvement 1 (figure 1a), le système 100 est dans une configuration initiale dans laquelle le réservoir inférieur 10 et le réservoir supérieur 20 ne se touchent pas. Dans la configuration initiale, sont couplés mécaniquement de façon à avoir une position relative :
- telle que l'ouverture inférieure 29 soit plus haute que l'ouverture supérieure 19, et/ou
- telle que la paroi avant 14 du conteneur inférieur 11 soit plus proche, selon la deuxième direction 152, du réservoir supérieur 20 que la paroi arrière 15, et/ou
- préférentiellement telle que le bord supérieur de la paroi avant 14 du conteneur inférieur 11 soit plus bas que l'ouverture inférieure 19 et/ou plus haut que le bord inférieur de la première butée 23, et/ou
- préférentiellement telle que la paroi avant 13 du couvercle 12 soit plus haute que le bord inférieur de la paroi avant 24 du conteneur supérieur 21, et/ou
- la distance selon la deuxième direction 152 entre (i) la paroi avant 13 du couvercle 12 et (ii) la paroi avant 24 du conteneur supérieur 21 est plus petite que la distance selon la deuxième direction 152 entre (i) la première butée 23 et (ii) la paroi avant 14.

En outre, le réservoir supérieur 20 contient un volume de matériau granulaire 30 plus grand que la contenance du réservoir inférieur 10. L'obturateur 22 empêche l'écoulement du matériau granulaire 30 hors du conteneur supérieur 21 via l'ouverture inférieure 29. Le réservoir inférieur 10 peut comprendre initialement du matériau granulaire, ou être vide.

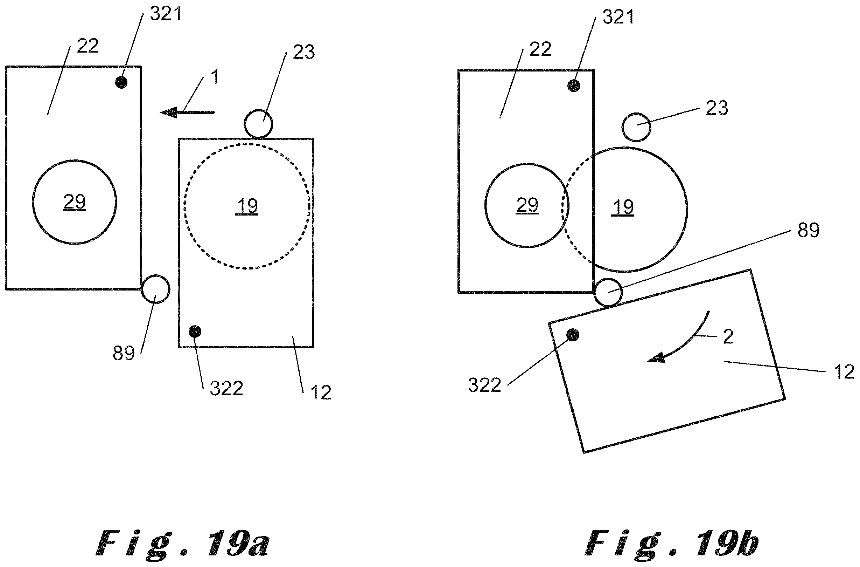

Le premier mouvement relatif 1 rapproche le conteneur inférieur 11 et le conteneur supérieur 21 selon la deuxième direction 152. Lors du premier mouvement relatif 1, le couvercle 12 rencontre le conteneur supérieur 21. Par exemple, comme illustré à la figure 1b, la paroi avant 13 du couvercle 12 bute contre la paroi avant 24 du conteneur supérieur 21. Le couvercle 12 est alors stoppé pendant que le conteneur inférieur 11 continue le premier mouvement relatif 1. Cet arrêt du couvercle 12 est équivalent à une poussée dans la deuxième direction 152, tendant à éloigner le couvercle 12 du conteneur inférieur 11. Il se produit donc un mouvement 2 du couvercle 12 par rapport au conteneur inférieur 11 qui amène le couvercle 12 à une deuxième position 102 dans laquelle l'ouverture supérieure 19 est plus ouverte que dans la première position 101. Ce mouvement 2 n'inclut préférentiellement aucune déformation du couvercle 12. Il peut être uniquement une translation selon la deuxième direction 152 (figure 1b), uniquement une rotation autour d'un axe perpendiculaire aux première 151 et deuxième 152 directions (figure 18b), uniquement une rotation autour d'un axe parallèle à la première direction 151 (figures 19b, 20b), ou une combinaison de translation(s) et/ou rotation(s).

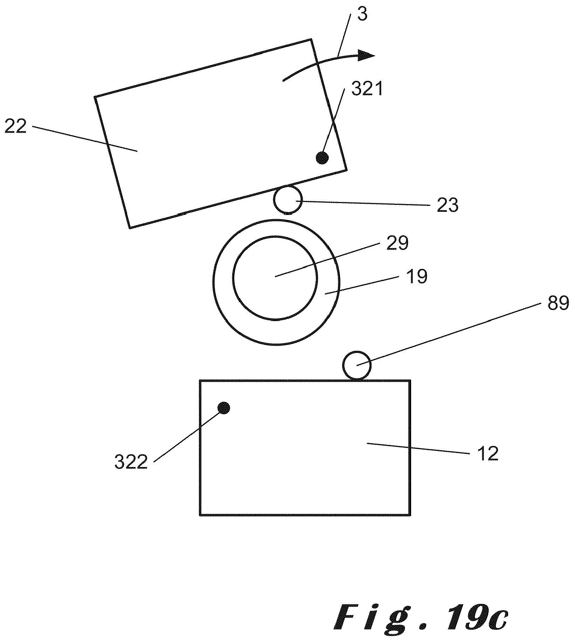

Lors du premier mouvement relatif 1, l'obturateur 22 rencontre le conteneur inférieur 11. Par exemple, comme illustré à la figure 1b, la paroi avant 14 du conteneur inférieur 11 bute contre la première butée 23 de l'obturateur 22. L'obturateur 22 est alors entrainé par le conteneur inférieur 11 qui continue le premier mouvement relatif 1. Cet entrainement de l'obturateur 22 est une poussée dans la deuxième direction 152, tendant à éloigner le couvercle 12 du conteneur supérieur 21. Il se produit donc un mouvement 3 de l'obturateur 22 par rapport au conteneur supérieur 21 qui amène l'obturateur 22 à une deuxième position 202 (figure 1c) dans laquelle l'ouverture inférieure 29 est au moins partiellement ouverte, préférentiellement totalement ouverte. Ce mouvement 3 n'inclut préférentiellement aucune déformation de l'obturateur 22. Il peut être uniquement une translation selon la deuxième direction 152 (figure 1c), uniquement une rotation autour d'un axe perpendiculaire aux première 151 et deuxième 152 directions (figure 18b), uniquement une rotation autour d'un axe parallèle à la première direction 151 (figures 19c, 20c), ou une combinaison de translation(s) et/ou rotation(s).

Lorsque l'obturateur 22 s'ouvre, un logement temporaire 91 situé sous la paroi arrière 25 du conteneur supérieur 21 apparait et il se remplit de matériau granulaire. Le matériau granulaire situé dans le logement temporaire 91 tombe lorsque l'obturateur 22 reprend 5 sa première position 201.

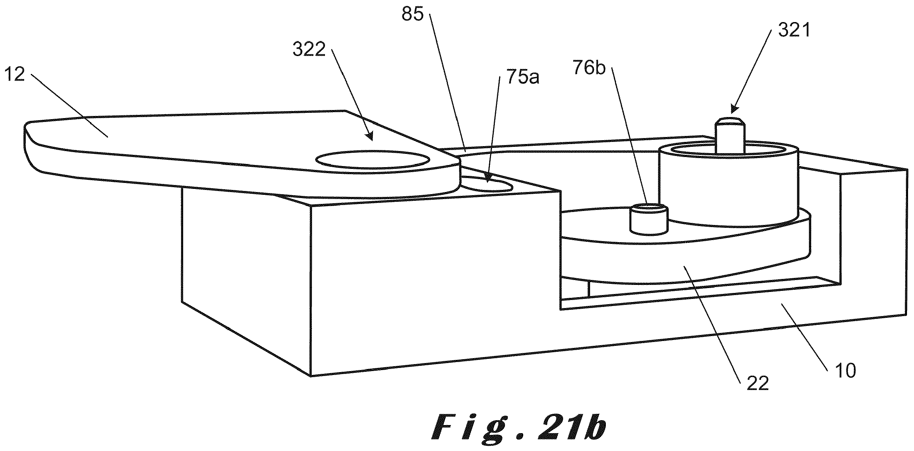

Le premier mouvement relatif 1 se termine lorsque le système 100 a une configuration ouverte dans laquelle un passage entre le conteneur supérieur 21 et le conteneur inférieur 11, via l'ouverture inférieure 29 et l'ouverture supérieure 19, est ouvert (figure 1c). Le système 100 est préférentiellement configuré pour arrêter le premier mouvement relatif 1 dans la configuration ouverte du système 100. Par exemple, une butée fixe par rapport au conteneur supérieur 21 ou au conteneur inférieur 11 (comme illustré par la butée 85 figure 21b) peut empêcher tout mouvement du conteneur inférieur 11 au-delà de cette configuration.

De préférence, dans la configuration ouverte du système 100, l'ouverture supérieure 19 du conteneur inférieur 11 dépasse l'ouverture inférieure 29 du conteneur supérieur 21 dans toutes les directions horizontales, notamment selon la deuxième direction 152 et selon une troisième direction perpendiculaire aux première 151 et deuxième 152 directions.

Le matériau granulaire 30 s'écoule alors par le passage. L'écoulement s'arrête spontanément lorsque le tas de matériau granulaire 30a dans le conteneur inférieur 11 atteint son angle de repos 31. La quantité de matériau granulaire dans le conteneur inférieur 11 suite à cette étape est toujours la même, quelle qu'ait été la quantité de matériau granulaire initialement présente dans le conteneur inférieur 11.

Après l'écoulement, le conteneur inférieur 11 comprend, autour du tas de matériaux granulaire 30a, un espace libre appelé espace tampon 92, 93, apte à recevoir un éventuel surplus de matériau granulaire, tel que celui présent dans le logement temporaire 91.

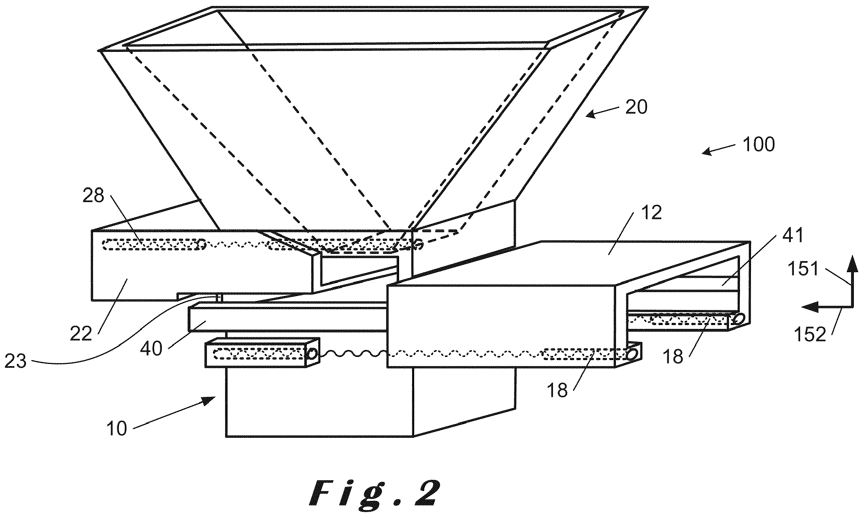

Le conteneur inférieur 11 repart ensuite en arrière 4, grâce au deuxième mouvement relatif 4 qui éloigne le conteneur inférieur 11 et le conteneur supérieur 21 selon la deuxième direction 152. Durant le deuxième mouvement relatif 4, l'obturateur 22 reprend 5 sa première position 201, de préférence automatiquement grâce à des deuxièmes éléments de rappel 28, par exemple des ressorts configurés comme illustré à la figure 2. En outre, le couvercle 12 reprend 6 sa première position 101, de préférence automatiquement grâce à des premiers éléments de rappel 18, par exemple des ressorts configurés comme illustré à la figure 2. Le système 1 est préférentiellement configuré pour qu'il existe un espace entre le tas 30a et le couvercle 12.

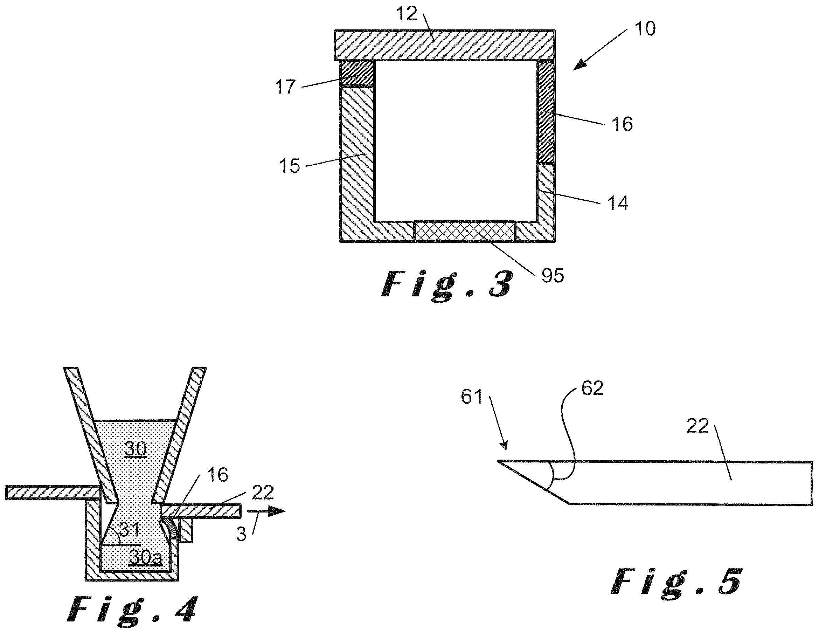

Du matériau granulaire peut ensuite être enlevée du conteneur inférieur 11, par exemple via un orifice fermable par un élément de fermeture 95 (figure 3) dans la paroi inférieure de celui-ci. Le système 100 peut alors réitérer un cycle de remplissage comprenant le premier mouvement 1 (qui induit automatiquement un transfert de matériau granulaire, à moins que le réservoir inférieur 10 ne soit déjà plein) et le deuxième mouvement 4.

La figure 2 illustre un mode de réalisation du système 100 dans la configuration ouverte. Elle permet notamment de voir des rails 40 sur lesquels coulisse le couvercle 12 grâce aux rainures 41. Elle permet aussi de voir un positionnement possible des premiers éléments de rappel 18 et des deuxièmes éléments de rappel 28.

La figure 3 illustre un mode de réalisation du réservoir inférieur 10 dans lequel la partie supérieure de la paroi avant 14 est formée par un joint avant 16 et la partie supérieure de la paroi arrière 15 est formée par un joint arrière 17. Les joints 16, 17 sont dans un matériau plus souple que le conteneur inférieur 11. La figure 3 montre aussi que le conteneur inférieur 11 peut avoir un orifice fermable dans sa paroi inférieure. Cet orifice peut être fermé par un élément de fermeture 95, et ouvert en déplaçant l'élément de fermeture 95. Il est de préférence ouvert lorsque le réservoir inférieur 10 est éloigné du réservoir supérieur 20. Il est de préférence fermé lorsque le conteneur inférieur 11 est sous le conteneur supérieur 20.

La figure 4 montre que le système 1 peut être prévu pour que le joint avant 16 plie au contact de l'obturateur 22.

La figure 5 illustre un mode de réalisation de l'obturateur 22, dans lequel son extrémité avant 61 est biseautée. L'angle 62 entre la paroi avant de l'obturateur 22 est l'horizontale est préférentiellement inférieur à l'angle de repos 31.

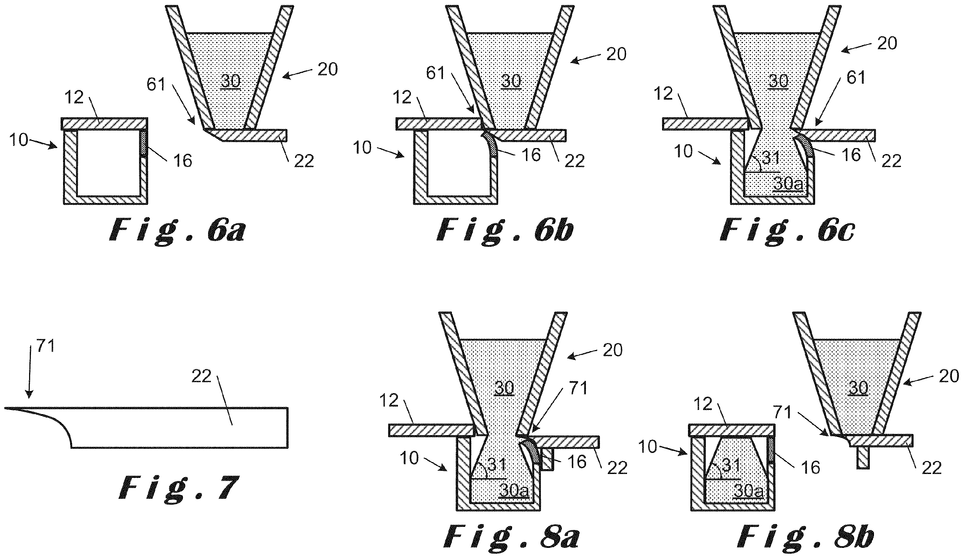

Les figures 6a à 6c illustrent comment l'extrémité avant 61 biseautée de l'obturateur 22 peut plier le joint avant 16 du réservoir inférieur 10.

La figure 7 illustre un autre mode de réalisation de l'obturateur 22, dans lequel son extrémité avant 71 est biseautée.

Les figures 8a à 8b illustrent comment l'extrémité avant 71 est biseautée de l'obturateur 22 peut plier le joint avant 16 du réservoir inférieur 10.

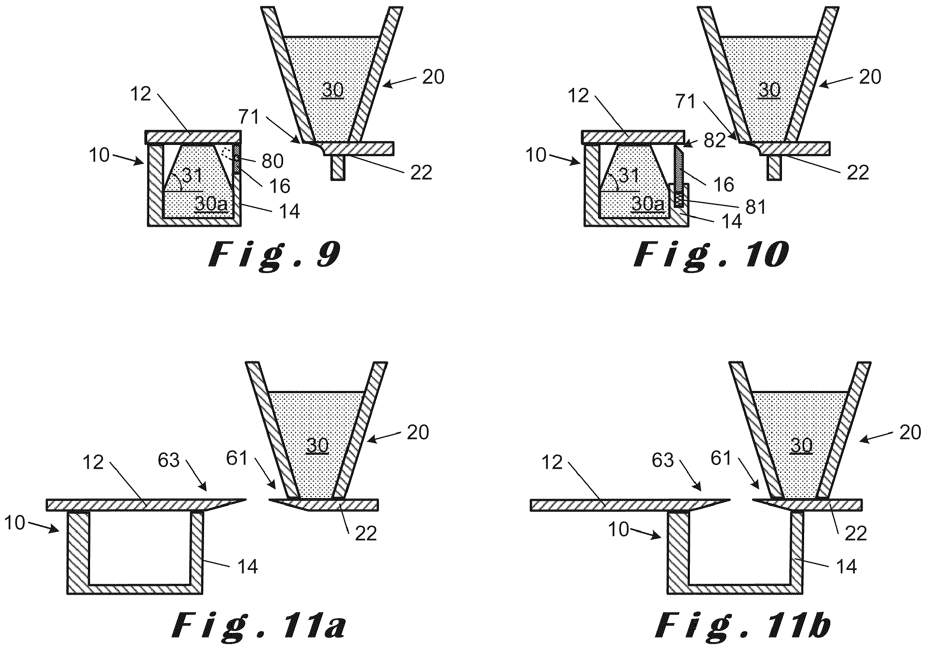

La figure 9 montre que le joint avant 16 peut être prévu pour plier partiellement : sa partie supérieure plie alors que sa partie inférieure reste en place, la délimitation entre sa partie supérieure et sa partie inférieure formant un pivot 80.

La figure 10 montre que le joint avant 16 peut être fixé dans une encoche de la paroi avant 14, par exemple par un ressort 81. En outre, quelle que soit la fixation entre le joint avant 16 et la paroi avant 14, le joint avant 16 peut avoir une extrémité supérieure biseautée.

Les figures 11a à 11c et 12 illustrent notamment les caractéristiques optionnelles suivantes de l'invention:
- l'extrémité avant 63 du couvercle 12 est biseautée,
- le couvercle 12 et l'obturateur 22 sont à une même hauteur,
- la première butée 23 est formée de deux parties de butées latérales 58a, 58b,
- la première butée 23 est sur le couvercle 12,
- la première butée 23 est latérale,
- lorsque le couvercle 12 est en butée contre l'obturateur 22, ils délimitent une ouverture 59 faisant partie du passage entre le conteneur supérieur 21 et le conteneur inférieur 11.

Ces caractéristiques peuvent être prises indépendamment ou en combinaison dans un système selon l'invention.

La figure 13 illustre un mode de réalisation du réservoir supérieur 20 dans lequel la partie inférieure du conteneur supérieur 21, qui jouxte l'obturateur 22, est formée d'un joint inférieur 26. Le joint 26 est dans un matériau plus souple que le conteneur supérieur 21. Il permet d'améliorer l'étanchéité. Un teljoint peut aussi être, en plus ou de façon alternative, fixé à l'obturateur 22.

Le système 100 comprend préférentiellement une deuxième butée 89 prévue pour créer un contact temporaire, direct ou indirect, entre le couvercle 12 et le réservoir supérieur 20, de façon à pousser le couvercle 12 de la première position 101 à la deuxième position 102. Elle est de préférence sur le réservoir supérieur 20, par exemple sur le conteneur supérieur 21.La figure 13 illustre un cas où la deuxième butée 89 est sur la paroi avant 24 du conteneur supérieur 21.

La figure 14 illustre un mode de réalisation du réservoir inférieur 10 dans lequel le réservoir inférieur 10 comprend une paroi 53 séparant, au moins partiellement, le réservoir inférieur 10 en un compartiment avant 51 et un compartiment arrière 52. Le système 100 est prévu pour que seul le compartiment arrière 52 soit situé sous l'ouverture inférieure 29 à la fin du premier mouvement relatif 1. Le compartiment avant 51 permet de recevoir le matériau granulaire qui était dans le logement temporaire 91. Il joue ainsi un rôle complémentaire à celui de l'espace tampon 92 en augmentant le volume pouvant recevoir du matériau granulaire ne tombant pas directement dans le conteneur inférieur 11.

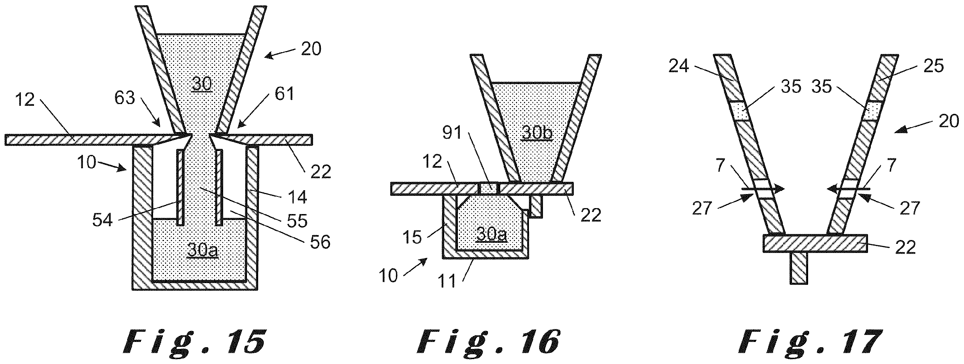

La figure 15 illustre un mode de réalisation du réservoir inférieur 10 dans lequel le réservoir inférieur 10 comprend une séparation 54 séparant, au moins partiellement, le réservoir inférieur 10 en un compartiment central 55 et un compartiment latéral 56. Le système 100 est prévu pour que seul le compartiment central 55 soit situé sous l'ouverture inférieure 29 à la fin du premier mouvement relatif 1. Le compartiment latéral 56 permet de recevoir le matériau granulaire qui était dans le logement temporaire 91. Il joue ainsi un rôle complémentaire à celui de l'espace tampon 92 en augmentant le volume pouvant recevoir du matériau granulaire ne tombant pas directement dans le conteneur inférieur 11.

La figure 16 montre que le logement temporaire 91 peut être présent entre le couvercle 12 et l'obturateur 22.

La figure 17 illustre un mode de réalisation du réservoir supérieur 20 dans lequel les parois avant 24 et arrière 25 du conteneur supérieur 21 comprennent des ouvertures 27 pour injecter 7 de l'air et des parties de parois 35 poreuses à l'air. Les parois du réservoir inférieur 10 pourraient aussi comprendre des ouvertures pour injecter de l'air et/ou des parties de parois poreuses à l'air.

Aux figures 18a, b, le mouvement 2 du couvercle 12 par rapport au conteneur inférieur 11 est une rotation autour d'un axe 310 et le mouvement 3 de l'obturateur 22 par rapport au conteneur supérieur est une rotation autour d'un axe 320. Les axes 310, 320 sont perpendiculaires aux première 151 et deuxième 152 directions. La paroi supérieure du couvercle 12 et la paroi inférieure de l'obturateur 22 ont préférentiellement une section circulaire.

Aux figures 19a à 19c, et 20a à 20c, le mouvement 2 du couvercle 12 par rapport au conteneur inférieur 11 est une rotation autour d'un axe 322 et le mouvement 3 de l'obturateur 22 par rapport au conteneur supérieur est une rotation autour d'un axe 321. Les axes 310, 320 sont parallèles à la première 151 direction, c'est-à-dire préférentiellement verticaux. Le couvercle 12 et la deuxième butée 89 ne sont pas représentés à la figure 20c.

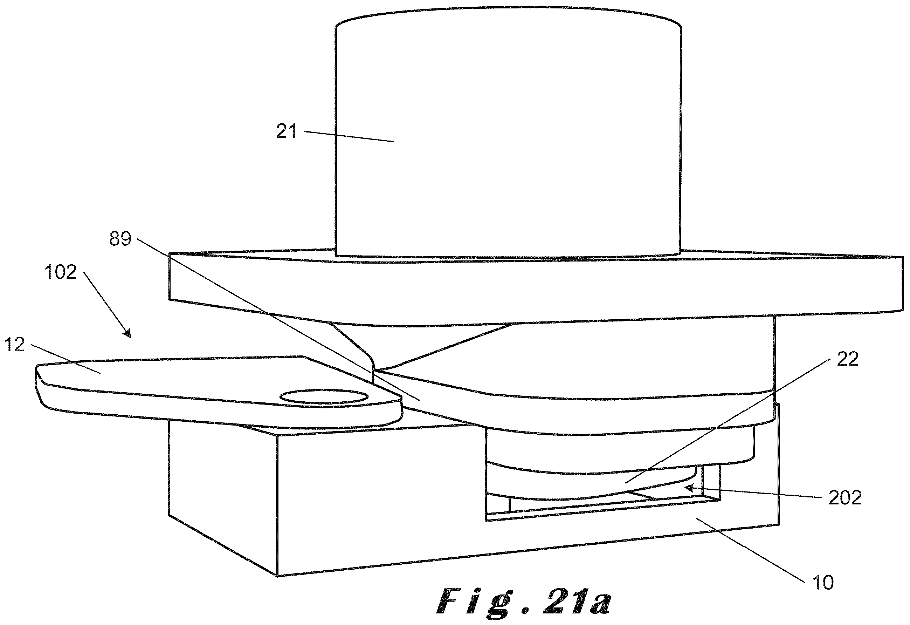

Les figures 21a, b, 22 et 23 montrent un autre mode de réalisation du système 100 dans lequel le mouvement 2 du couvercle 12 par rapport au conteneur inférieur 11 est une rotation autour d'un axe 322 vertical et le mouvement 3 de l'obturateur 22 par rapport au conteneur supérieur est une rotation autour d'un axe 321 vertical. Les figures 21a, b, 22 et 23 montrent le système 100 dans la configuration ouverte, à la fin du premier mouvement relatif 1, alors que le couvercle 12 est dans la deuxième position 102 et l'obturateur 22 est dans la deuxième position 202. La vue des figures 21a et b est identique, mais le conteneur 21 a été omis de la figure 21b pour une meilleure visualisation du couvercle 12 et de l'obturateur 22. On comprend que la butée 85 arrête le premier mouvement relatif 1 lorsque le passage entre le conteneur supérieur 21 et le conteneur inférieur 11 est ouvert.

Un téton 75b sur le couvercle 12 et coulissant dans une rainure circulaire 75a pratiquée par exemple sur le dessus du conteneur inférieur 11 peut servir de butée pour limiter le mouvement du couvercle 12 par rapport au conteneur inférieur 11. Un téton 76b sur l'obturateur 22 et coulissant dans une rainure circulaire pratiquée par exemple sur le dessus du conteneur supérieur 21 peut servir de butée pour limiter le mouvement de l'obturateur 22 par rapport au conteneur supérieur 21.

Comme illustré par les figures 22 et 23, la premier butée 23 peut comprendre une première partie 23a fixée au réservoir inférieur 10 et une deuxième partie 23b fixée à l'obturateur 22 et prévues pour buter l'une contre l'autre. La deuxième partie 23b peut avoir la forme d'une découpe configurée pour le contact avec la première partie 23a et pour guider le mouvement 2 de l'obturateur 22 par rapport au conteneur inférieur 11.

En d'autres termes, l'invention se rapporte à copie de l'abstract

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Système (100) comprenant:
• un réservoir inférieur (10) ayant une première contenance, et comprenant un conteneur inférieur (11) ayant une ouverture supérieure (19);
• un réservoir supérieur (20) ayant une deuxième contenance, et comprenant :
∘ un conteneur supérieur (21) ayant une ouverture inférieure (29),
∘ un obturateur (22) configuré pour passer, par poussée, d'une première position (201) dans laquelle il ferme l'ouverture inférieure (29), à une deuxième position (202) dans laquelle il ouvre, au moins partiellement, l'ouverture inférieure (29);
dans lequel la deuxième contenance est supérieure à la première contenance ;
configuré pour un premier mouvement relatif (1) entre le conteneur inférieur (11) et le conteneur supérieur (21) ;
configuré pour que l'obturateur (22) bute contre le réservoir inférieur (10) lors dudit premier mouvement relatif (1), de façon à ce que le réservoir inférieur (10) pousse l'obturateur (22) pour qu'il passe (3) de la première position (201) à la deuxième position (202) ; et
configuré pour former un passage via l'ouverture inférieure (29) du conteneur supérieur (21) et l'ouverture supérieure (19) du conteneur inférieur (11), entre le conteneur supérieur (21) et le conteneur inférieur (11) suite audit premier mouvement relatif (1) ;
**caractérisé en ce que** le réservoir inférieur (10) comprend un couvercle (12) configuré pour passer, par poussée, d'une première position (101) dans laquelle il ferme, au moins partiellement, l'ouverture supérieure (19), à une deuxième position (102) dans laquelle il ouvre, au moins partiellement, l'ouverture supérieure (19) ; le système (100) étant configuré pour que le couvercle (12) bute contre le réservoir supérieur (20) lors dudit premier mouvement relatif (1), de façon à ce que le réservoir supérieur (20) pousse le couvercle (12) pour qu'il passe (2) de la première position (101) à la deuxième position (102).

2. Système selon la revendication 1, dans lequel le conteneur inférieur (11) comprend une paroi avant (14) et une paroi arrière (15), la paroi avant (14) étant plus petite que la paroi arrière (15).

3. Système selon l'une quelconque des revendications précédentes, dans lequel le conteneur inférieur (11) comprend une paroi avant (14) dont la partie supérieure est formée par un joint avant (16).

4. Système selon l'une quelconque des revendications précédentes, dans lequel le couvercle (12) et/ou l'obturateur (22) est configuré pour passer de la première (101) à la deuxième (102) position par une translation, une rotation, ou une combinaison d'une translation et d'une rotation.

5. Système selon l'une quelconque des revendications précédentes, dans lequel l'extrémité avant (61, 71) de l'obturateur (22) est biseautée.

6. Système selon l'une quelconque des revendications précédentes, comprenant une première butée (23) configurée pour former un contact momentané entre l'obturateur (22) et le réservoir inférieur (10) lorsque l'obturateur (22) bute contre le réservoir inférieur (10) lors dudit premier mouvement relatif (1).

7. Système selon l'une quelconque des revendications précédentes, dans lequel l'obturateur (22) est plus bas que le couvercle (12).

8. Système selon l'une quelconque des revendications précédentes, configuré pour que le couvercle (12) bute contre le réservoir supérieur (20) avant que l'obturateur (22) ne bute contre le réservoir inférieur (10) lors dudit premier mouvement relatif (1).

9. Système selon l'une quelconque des revendications précédentes, comprenant des premiers éléments de rappel (18) configurés pour maintenir le couvercle (12) dans la première position (101) lorsqu'il ne subit pas de poussée et/ou des deuxièmes éléments de rappel (28) configurés pour maintenir l'obturateur (22) dans la première position (201) lorsqu'il ne subit pas de poussée.

10. Système selon l'une quelconque des revendications précédentes, configuré pour arrêter le premier mouvement relatif (1), par exemple à l'aide d'une butée (85), lorsque le passage entre le conteneur supérieur (21) et le conteneur inférieur (11) est ouvert, de façon à empêcher la continuation du premier mouvement relatif (1) au-delà de la configuration dans laquelle le passage entre le conteneur supérieur (21) et le conteneur inférieur (11) est ouvert.

11. Système selon l'une quelconque des revendications précédentes, dans lequel le réservoir inférieur (10) comprend une paroi (53) divisant le réservoir inférieur (10) en un compartiment avant (51) et un compartiment arrière (52).

12. Système selon l'une quelconque des revendications précédentes, dans lequel le réservoir inférieur (10) et/ou le réservoir supérieur (20) comprend des ouvertures (27) pour injecter (7) de l'air et des parties de parois (35) poreuses à l'air.

13. Procédé pour transférer un volume de matériau granulaire (30) d'un réservoir supérieur (20) de plus grande contenance à un réservoir inférieur (10) de plus petite contenance, ledit procédé comprenant les étapes suivantes :
(a) mettre dans un conteneur supérieur (21) du réservoir supérieur (20) un volume de matériau granulaire (30) plus grand que la contenance du réservoir inférieur (10), le conteneur supérieur (21) ayant une ouverture inférieure (29) fermée par un obturateur (22) empêchant le matériau granulaire (30) de s'écouler par l'ouverture inférieure (29) ;
(b) réaliser un premier mouvement relatif (1) entre le conteneur supérieur (21) et un conteneur inférieur (11) du réservoir supérieur (20), durant lequel :
∘ un couvercle (12) du réservoir inférieur (10) est poussé par le réservoir supérieur (20) de façon à ouvrir, au moins partiellement, une ouverture supérieure (19) du conteneur inférieur (11),
∘ l'obturateur (22) est poussé par le réservoir inférieur (10) de façon à ouvrir, au moins partiellement, l'ouverture inférieure (29),
∘ l'ouverture inférieure (29) et l'ouverture supérieure (19) se placent de façon à former un passage entre le conteneur supérieur (21) et le conteneur inférieur (11) ;
(c) laisser du matériau granulaire (30) s'écouler par ledit passage de façon à former un tas de matériau granulaire (30a) dans le conteneur inférieur (11), jusqu'à ce que le tas de matériau granulaire (30a) atteigne un angle de repos (31).

14. Procédé selon la revendication précédente comprenant en outre les étapes suivantes :
(d) réaliser un deuxième mouvement relatif (4), qui est un mouvement retour du premier mouvement relatif (1), entre le conteneur supérieur (21) et le conteneur inférieur (11), durant lequel :
∘ l'ouverture inférieure (29) et l'ouverture supérieure (19) se décalent latéralement,
∘ l'obturateur (22) referme l'ouverture inférieure (29),
∘ le couvercle (12) referme, au moins partiellement, l'ouverture supérieure (19).

15. Procédé selon la revendication précédente comprenant en outre les étapes suivantes :
(e) enlever du matériau granulaire (30a) du conteneur inférieur (11) ;
(f) réaliser le premier mouvement relatif (1) une deuxième fois.
